(19) Europäisches Patentamt
European Patent Office
Office européen des brevets

(11) **EP 4 391 414 A1**

(12) **EUROPEAN PATENT APPLICATION**
published in accordance with Art. 153(4) EPC

(43) Date of publication:
**26.06.2024 Bulletin 2024/26**

(21) Application number: **22877863.5**

(22) Date of filing: **23.09.2022**

(51) International Patent Classification (IPC):
***H04B 7/185*** (2006.01)

(52) Cooperative Patent Classification (CPC):
**H04B 7/185**

(86) International application number:
**PCT/CN2022/120746**

(87) International publication number:
**WO 2023/056844 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.10.2021 CN 202111177089**

(71) Applicant: **Huawei Technologies Co., Ltd.
Shenzhen, Guangdong 518129 (CN)**

(72) Inventors:
• **YANG, Ruonan
Shenzhen, Guangdong 518129 (CN)**

• **CHEN, Ying
Shenzhen, Guangdong 518129 (CN)**
• **DU, Yinggang
Shenzhen, Guangdong 518129 (CN)**
• **QIAO, Yunfei
Shenzhen, Guangdong 518129 (CN)**
• **WANG, Jun
Shenzhen, Guangdong 518129 (CN)**

(74) Representative: **Huawei European IPR
Huawei Technologies Duesseldorf GmbH
Riesstraße 25
80992 München (DE)**

(54) **DATA TRANSMISSION METHOD AND APPARATUS**

(57)    The application provides a data communication method and apparatus. The method includes: A terminal device obtains first indication information, where the first indication information indicates time information, and the time information is related to remaining stay duration of the terminal device on a first beam; and if communication of first data is not completed within the remaining stay duration, the terminal device determines a target time domain resource based on the time information and a first time domain resource indicated by a network device, and communicates the first data on the target time domain resource. According to the data communication method and apparatus provided in the application, a network throughput may be improved in a beam switching scenario.

FIG. 3

# Description

This application claims priority to Chinese Patent Application No. 202111177089.5, filed with the China National Intellectual Property Administration on October 9, 2021 and entitled "DATA COMMUNICATION METHOD AND APPARATUS", which is incorporated herein by reference in its entirety.

## TECHNICAL FIELD

This application relates to the communication field, and more specifically, to a data communication method and apparatus.

## BACKGROUND

With development of the information technologies, there are more urgent requirements for high efficiency, mobility and diversity of communication. Currently, satellites play an irreplaceable role in some important fields. Compared with terrestrial mobile communication networks, satellite communication can achieve wide area or even global coverage by using high-orbit, medium-orbit and low-orbit satellites, and can provide undifferentiated communication services for global users.

For example, satellite communication may be applied to the Internet of things (internet of things, IoT) field. A terminal device in the Internet of things performs repeated communication in a data communication process, and a quantity of times of repeated communication is related to a coverage condition of the terminal device. A poorer coverage condition indicates a larger quantity of times of repeated communication. Therefore, duration of a transport block may be long. In this scenario, due to motion of a satellite, a beam is frequently switched. In other words, the terminal device stays on a beam for limited time. During beam switching, if communication of a piece of data is interrupted by the beam switching, the data cannot be decoded, and a hybrid automatic repeat request (hybrid automatic repeat request, HARQ) process is restarted. Consequently, a network throughput is reduced.

## SUMMARY

The application provides a data communication method and apparatus, to improve a network throughput.

According to a first aspect, a data communication method is provided. The method may be performed by a terminal device, or may be performed by a component (such as a chip or a chip system) configured in the terminal device. This is not limited in the application. The method includes: The terminal device obtains first indication information, where the first indication information indicates time information, and the time information is related to remaining stay duration of the terminal device on a first beam; and if communication of first data is not completed within the remaining stay duration, the terminal device determines a target time domain resource based on the time information and a first time domain resource indicated by a network device, and the terminal device communicates the first data on the target time domain resource.

Based on the foregoing solution, it may be determined whether beam switching occurs in a time period for communicating the first data. If beam switching occurs, communication of the first data (including receiving or sending of the first data) is delayed until after beam switching, to avoid communicating the first data at a moment of beam switching. This solution can improve the network throughput.

With reference to the first aspect, in some implementations of the first aspect, the terminal device determines, based on the remaining stay duration and at least one of the following, that the communication of the first data is not completed within the remaining stay duration: duration between first time and second time, where the first time corresponds to time at which the terminal device receives scheduling information of the first data, the scheduling information includes the first time domain resource, and the second time corresponds to an end location of the first time domain resource on which the terminal device communicates the first data; and duration between the first time and third time, where the third time corresponds to an end location of a time domain resource occupied by feedback information that is of the first data and that is determined based on the scheduling information.

With reference to the first aspect, in some implementations of the first aspect, it is determined that the communication of the first data is not completed within the remaining stay duration t if at least one of the following is met: t<T1, where T1 is the duration between the first time and the second time; and $T2-t_d<t<T2$, where T2 is the duration between the first time and the third time, and $t_d$ is duration corresponding to the first time domain resource.

Based on the foregoing solution, it can be determined not only whether communication of the first data is interrupted by beam switching, but also whether a feedback of the first data is interrupted by beam switching. In this way, re-communication caused by interruption of the feedback of the first data due to beam switching can be avoided, that is, communication resources can be saved.

With reference to the first aspect, in some implementations of the first aspect, the time information is the remaining stay duration.

Based on the foregoing solution, the terminal device may determine, based on the remaining stay duration, time for delaying the communication of the first data.

With reference to the first aspect, in some implementations of the first aspect, the terminal device obtains the scheduling information of the first data at the first time, where the scheduling information includes the first time domain resource, where the time information includes a difference between the remaining stay duration of the terminal device on the first beam and any one of the following: the duration between the first time and the second time, where the second time corresponds to the end location of the first time domain resource on which the terminal device communicates the first data; and the duration between the first time and the third time, where the third time corresponds to the end location of the time domain resource occupied by the feedback information that is of the first data and that is determined based on the scheduling information.

Based on the foregoing solution, the first indication information indicates a time difference. Therefore, compared with the solution in which the first indication information indicates the remaining stay duration, indication resources can be saved.

With reference to the first aspect, in some implementations of the first aspect, the time information includes $\Delta t$, where $\Delta t$ is less than the remaining stay duration.

Based on the foregoing solution, a time value indicated by the first indication information is small, so that a waste of communication resources caused by an excessively long delay of communicating the first data by the terminal device can be avoided.

With reference to the first aspect, in some implementations of the first aspect, the first indication information further includes an identification field, and the identification field indicates that the time information is used to: communicate the first data, or communicate the feedback of the first data.

Based on the foregoing solution, the first indication information may further indicate a specific use of the time information. In this way, after receiving the time information, the terminal device does not need to determine whether the time information is used to communicate downlink data or to communicate a feedback of the downlink data. This solution may be applicable to a terminal device with low complexity.

With reference to the first aspect, in some implementations of the first aspect, if the terminal device determines that the remaining stay duration t meets t<T1, the terminal device communicates the first data on the target time domain resource, where T1 is the duration between the first time and the second time, the first time corresponds to the time at which the terminal device receives the scheduling information of the first data, the scheduling information includes the first time domain resource, and the second time corresponds to the end location of the first time domain resource on which the terminal device communicates the first data; and if the terminal device determines that the remaining stay duration t meets $T2-t_d<t<T2$, the terminal device communicates the feedback information of the first data on the target time domain resource, where T2 is the duration between the first time and the third time, the third time corresponds to the end location of the time domain resource occupied by the feedback information that is of the first data and that is determined based on the scheduling information, and $t_d$ is the duration corresponding to the first time domain resource.

Based on the foregoing solution, the first indication information does not include an identification field indicating the specific use of the time information. In this way, after receiving the time information, the terminal device needs to determine whether the time information is used to communicate downlink data or to communicate the feedback of the downlink data. This solution may be applicable to a terminal device with high complexity, and indication resources can be saved.

According to a second aspect, a data communication method is provided. The method may be performed by a network device, or may be performed by a component (such as a chip or a chip system) configured in the network device. This is not limited in this application. The method includes: The network device obtains remaining stay duration of a terminal device on a first beam; and if determining that communication of first data is not completed within the remaining stay duration, the network device communicates the first data on a target time domain resource, where the target time domain resource is determined based on a first time domain resource indicated by the network device and the remaining stay duration.

Based on the foregoing solution, it may be determined whether beam switching occurs in a time period for communicating the first data. If beam switching occurs, communication of the first data (including receiving or sending of the first data) is delayed until after beam switching, to avoid communicating the first data at a moment of beam switching. This solution can improve the network throughput.

With reference to the second aspect, in some implementations of the second aspect, the network device sends first indication information, where the first indication information indicates time information, and the time information is used with the first time domain resource to determine the target time domain resource.

With reference to the second aspect, in some implementations of the second aspect, the network device determines, based on the remaining stay duration and at least one of the following, that the communication of the first data is not completed within the remaining stay duration: duration between first time and second time, where the first time corresponds to time at which the terminal device receives scheduling information of the first data, the scheduling information includes the first time domain resource, and the second time corresponds to an end location of the first time domain resource on which the terminal device communicates the first data; and duration between the first time and third time, where the third time corresponds to an end location of a time domain resource occupied by feedback information that is of the first data and that is determined based on the scheduling information.

With reference to the second aspect, in some implementations of the second aspect, it is determined that the communication of the data is not completed within the remaining stay duration t if one or more of the following are met: $t<T1$, where $T1$ is the duration between the first time and the second time; and $T2-t_d<t<T2$, where $T2$ is the duration between the first time and the third time, and td is duration corresponding to the first time domain resource.

Based on the foregoing solution, it can be determined not only whether communication of the first data is interrupted by beam switching, but also whether a feedback of the first data is interrupted by beam switching. In this way, re-communication caused by interruption of the feedback of the first data due to beam switching can be avoided, that is, communication resources can be saved.

With reference to the second aspect, in some implementations of the second aspect, the time information is the remaining stay duration.

With reference to the second aspect, in some implementations of the second aspect, the time information includes a difference between the remaining stay duration and any one of the following: the duration between the first time and the second time, where the first time corresponds to the time at which the terminal device receives the scheduling information of the first data, the scheduling information includes the first time domain resource, and the second time corresponds to the end location of the first time domain resource on which the terminal device communicates the first data; and the duration between the first time and the third time, where the third time corresponds to the end location of the time domain resource occupied by the feedback information that is of the first data and that is determined based on the scheduling information.

Based on the foregoing solution, the first indication information indicates a time difference. Therefore, compared with the solution in which the first indication information indicates the remaining stay duration, indication resources can be saved.

With reference to the second aspect, in some implementations of the second aspect, the time information includes $\Delta t$, where $\Delta t$ is less than the remaining stay duration.

Based on the foregoing solution, a time value indicated by the first indication information is small, so that a waste of communication resources caused by an excessively long delay of communicating the first data by the terminal device can be avoided.

With reference to the second aspect, in some implementations of the second aspect, the first indication information further includes an identification field, and the identification field indicates that the time information is used to: communicate the first data, or communicate the feedback information of the first data.

Based on the foregoing solution, the first indication information may further indicate a specific use of the time information. In this way, after receiving the time information, the terminal device does not need to determine whether the time information is used to communicate downlink data or to communicate a feedback of the downlink data. This solution may be applicable to a terminal device with low complexity.

With reference to the second aspect, in some implementations of the second aspect, the remaining stay duration is determined based on at least one of the following: relative locations of the terminal device and the network device, a moving speed of the network device, and a coverage area of the first beam.

According to a third aspect, a data communication apparatus is provided. The apparatus may be a terminal device, or the apparatus may be a component (such as a chip or a chip system) configured in the terminal device. This is not limited in this application. The apparatus includes a processing unit and a transceiver unit. The transceiver unit is configured to obtain first indication information, where the first indication information indicates time information, and the time information is related to remaining stay duration of the terminal device on a first beam. The processing unit is configured to: when determining that communication of first data is not completed within the remaining stay duration, determine a target time domain resource based on the time information and a first time domain resource indicated by a network device. The transceiver unit is further configured to communicate the first data on the target time domain resource.

With reference to the third aspect, in some implementations of the third aspect, the processing unit is further configured to determine, based on the remaining stay duration and at least one of the following, that the communication of the first data is not completed within the remaining stay duration: duration between first time and second time, where the first time corresponds to time at which the terminal device receives scheduling information of the first data, the scheduling information includes the first time domain resource, and the second time corresponds to an end location of the first time domain resource on which the terminal device communicates the first data; and duration between the first time and third time, where the third time corresponds to an end location of a time domain resource occupied by feedback information that is of the first data and that is determined based on the scheduling information.

With reference to the third aspect, in some implementations of the third aspect, the processing unit determines that the communication of the first data is not completed within the remaining stay duration t if at least one of the following is met: $t<T1$, where $T1$ is the duration between the first time and the second time; and $T2-t_d<t<T2$, where $T2$ is the duration between the first time and the third time, and $t_d$ is duration corresponding to the first time domain resource.

With reference to the third aspect, in some implementations of the third aspect, the time information is the remaining stay duration.

With reference to the third aspect, in some implementations of the third aspect, the transceiver unit is further configured to obtain the scheduling information of the first data at the first time, where the scheduling information includes the first time domain resource, and the time information includes a difference between the remaining stay duration of the terminal device on the first beam and any one of the following: the duration between the first time and the second time, where the second time corresponds to the end location of the first time domain resource on which the terminal device communicates the first data; and the duration between the first time and the third time, where the third time corresponds to the end location of the time domain resource occupied by the feedback information that is of the first data and that is determined based on the scheduling information.

With reference to the third aspect, in some implementations of the third aspect, the time information includes $\Delta t$, where $\Delta t$ is less than the remaining stay duration.

With reference to the third aspect, in some implementations of the third aspect, the first indication information further includes an identification field, and the identification field indicates that the time information is used to: communicate the first data, or communicate a feedback of the first data.

With reference to the third aspect, in some implementations of the third aspect, if the processing unit determines that the remaining stay duration t meets t<T1, the transceiver unit communicates the first data on the target time domain resource, where T1 is the duration between the first time and the second time, the first time corresponds to the time at which the terminal device receives the scheduling information of the first data, the scheduling information includes the first time domain resource, and the second time corresponds to the end location of the first time domain resource on which the terminal device communicates the first data; and if the processing unit determines that the remaining stay duration t meets $T2-t_d<t<T2$, the terminal device communicates the feedback information of the first data on the target time domain resource, where T2 is the duration between the first time and the third time, the third time corresponds to the end location of the time domain resource occupied by the feedback information that is of the first data and that is determined based on the scheduling information, and $t_d$ is the duration corresponding to the first time domain resource.

According to a fourth aspect, a data communication apparatus is provided. The apparatus may be a network device, or the apparatus may be a component (such as a chip or a chip system) configured in the network device. This is not limited in this application. The apparatus includes a processing unit and a transceiver unit. The processing unit is configured to obtain remaining stay duration of a terminal device on a first beam. The processing unit is further configured to: when determining that communication of first data is not completed within the remaining stay duration, control a transceiver unit to communicate the first data on a target time domain resource, where the target time domain resource is determined based on a first time domain resource indicated by the network device and the remaining stay duration.

With reference to the fourth aspect, in some implementations of the fourth aspect, the transceiver unit is further configured to send first indication information, where the first indication information indicates time information, and the time information is used with the first time domain resource to determine the target time domain resource.

With reference to the fourth aspect, in some implementations of the fourth aspect, the processing unit is further configured to determine, based on the remaining stay duration and at least one of the following, that the communication of the first data is not completed within the remaining stay duration: duration between first time and second time, where the first time corresponds to time at which the terminal device receives scheduling information of the first data, the scheduling information includes the first time domain resource, and the second time corresponds to an end location of the first time domain resource on which the terminal device communicates the first data; and duration between the first time and third time, where the third time corresponds to an end location of a time domain resource occupied by feedback information that is of the first data and that is determined based on the scheduling information.

With reference to the fourth aspect, in some implementations of the fourth aspect, the processing unit determines that the communication of the first data is not completed within the remaining stay duration t if at least one of the following is met: t<T1, where T1 is the duration between the first time and the second time; and $T2-t_d<t<T2$, where T2 is the duration between the first time and the third time, and $t_d$ is duration corresponding to the first time domain resource.

With reference to the fourth aspect, in some implementations of the fourth aspect, the time information is the remaining stay duration.

With reference to the fourth aspect, in some implementations of the fourth aspect, the time information includes a difference between the remaining stay duration and any one of the following: the duration between the first time and the second time, where the first time corresponds to the time at which the terminal device receives the scheduling information of the first data, the scheduling information includes the first time domain resource, and the second time corresponds to the end location of the first time domain resource on which the terminal device communicates the first data; and the duration between the first time and the third time, where the third time corresponds to the end location of the time domain resource occupied by the feedback information that is of the first data and that is determined based on the scheduling information.

With reference to the fourth aspect, in some implementations of the fourth aspect, the time information includes Δt, where Δt is less than the remaining stay duration.

With reference to the fourth aspect, in some implementations of the fourth aspect, the first indication information further includes an identification field, and the identification field indicates that the time information is used to: communicate the first data, or communicate the feedback information of the first data.

With reference to the fourth aspect, in some implementations of the fourth aspect, the remaining stay duration is determined based on at least one of the following: relative locations of the terminal device and the network device, a moving speed of the network device, and a coverage area of the first beam.

According to a fifth aspect, a communication apparatus is provided. The apparatus includes a processor, and the processor is coupled to a memory, and may be configured to execute instructions in the memory, to implement the method according to any one of the first aspect or the possible implementations of the first aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in a terminal device. When the apparatus is the chip configured in the terminal device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

According to a sixth aspect, a communication apparatus is provided. The apparatus includes a processor, and the processor is coupled to a memory, and may be configured to execute instructions in the memory, to implement the method according to any one of the second aspect or the possible implementations of the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in a network device. When the apparatus is the chip configured in the network device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

According to a seventh aspect, a communication apparatus is provided. The apparatus includes a logic circuit, and the logic circuit is configured to be coupled to an input/output interface, and transmit data through the input/output interface, to perform the method according to any one of the first aspect and the second aspect and the possible implementations of the first aspect and the second aspect.

According to an eighth aspect, a computer-readable storage medium is provided. The computer-readable storage medium stores a computer program (which may also be referred to as code or instructions). When the computer program is run on a computer, the computer is enabled to perform the method according to any one of the first aspect and the second aspect and the possible implementations of the first aspect and the second aspect.

According to a ninth aspect, a computer program product is provided. The computer program product includes a computer program (which may also be referred to as code or instructions). When the computer program is run, a computer is enabled to perform the method according to any one of the first aspect and the second aspect and the possible implementations of the first aspect and the second aspect.

According to a tenth aspect, a communication system is provided. The communication system includes the foregoing network device and the terminal device.

For specific beneficial effects brought by the third aspect to the tenth aspect, refer to descriptions of beneficial effects in the first aspect and the second aspect. Details are not described herein again.

## BRIEF DESCRIPTION OF DRAWINGS

FIG. 1 is a schematic diagram of a network architecture according to an embodiment of the application;

FIG. 2 is a schematic diagram of a beam switching scenario according to an embodiment of the application;

FIG. 3 is a flowchart of a data communication method according to an embodiment of the application;

FIG. 4 is a schematic diagram of communicating downlink data according to an embodiment of the application;

FIG. 5 is a schematic diagram of communicating a feedback of downlink data according to an embodiment of the application;

FIG. 6 is a schematic diagram of communicating uplink data according to an embodiment of the application;

FIG. 7 is a schematic block diagram of a data communication apparatus according to an embodiment of the application;

FIG. 8 is a schematic block diagram of another data communication apparatus according to an embodiment of the application;

FIG. 9 is a schematic diagram of a structure of a data communication apparatus according to an embodiment of the application;

FIG. 10 is a schematic diagram of a structure of another data communication apparatus according to an embodiment of the application; and

FIG. 11 is a schematic diagram of a structure of a communication apparatus according to an embodiment of the application.

## DESCRIPTION OF EMBODIMENTS

The following describes the technical solutions of the application with reference to the accompanying drawings.

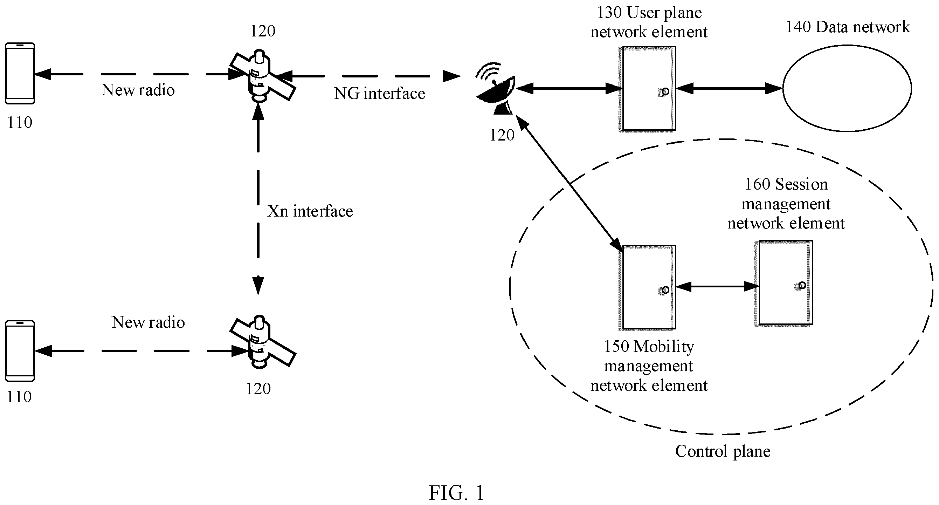

FIG. 1 is a schematic diagram of a network architecture according to an embodiment of the application.

The network architecture in which a satellite communication system is integrated with a fifth generation mobile communication technology (5th generation mobile communication technology, 5G) shown in FIG. 1 includes at least one terminal device 110, at least one network device 120, a user plane network element 130, a data network 140, and a core network control plane network element, such as a mobility management network element 150 and a session management network element 160. The network device may be a satellite or a gateway (gateway), and is configured to provide a communication service for the terminal device. The gateway may also be referred to as a terrestrial station, a gateway station, or the like. A link between the satellite and the terminal device is referred to as a service link (service link), and a link between the satellite and the gateway is a feeder link (feeder link).

When the satellite works in a transparent (transparent) mode, the satellite has a relay and forwarding function. The gateway has functions of a base station or some functions of a base station. Optionally, the gateway may be considered as a terrestrial base station. Alternatively, a terrestrial base station and the gateway may be deployed separately.

When the satellite works in a regenerative (regenerative) mode, the satellite has a data processing capability, and functions of a base station or some functions of a base station, and the satellite may be considered as a base station.

In a 5G communication system, a terrestrial terminal device accesses a network through 5G new radio, and a 5G network device is deployed on a satellite and connected to a terrestrial core network through a radio link. In addition, a radio link exists between satellites to implement signaling interaction and user data communication between network devices. All network elements in FIG. 1 and interfaces of the network elements are described as follows:

The terminal device 110 is a mobile device that supports 5G new radio, and may access a satellite network through an air interface and initiate services such as calls and Internet access.

The terminal device may also be referred to as a terminal, an access terminal, user equipment, a subscriber unit, a subscriber station, a mobile station, a mobile console, a remote station, a remote terminal, a mobile device, a user terminal, a wireless communication device, a user agent, or a user apparatus. The terminal in embodiments of the application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not merely a hardware device, but is used to implement a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

The network device 120 may also be referred to as an access network ((radio) access network, (R)AN) device, and can manage a radio resource. The network device 120 mainly provides a wireless access service, schedules a wireless resource for an accessed terminal device, provides a reliable wireless communication protocol, a data encryption protocol, and the like, and can complete forwarding of terminal device data between a terminal device and a core network.

For example, the network device in embodiments of the application may be any communication device that is configured to communicate with user equipment and has a wireless transceiver function, may be a network device deployed on a satellite, or may be a network device deployed on the ground. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved base station (home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (TRP or TP) in a 5G system such as an NR system, may be one antenna panel or a group (including a plurality of antenna panels) of antenna panels of a base station in a 5G system, or may be a network node, such as a baseband unit (BBU) or a distributed unit (distributed unit, DU), that constitutes a gNB or a transmission point.

In some deployments, the gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified into a network device in an access network, or the CU may be classified into a network device in a core network (core network, CN). This is not limited in the application.

The core network element provides services such as user access control, mobility management, session management, user security authentication, and charging. The 5G core network includes a plurality of functional units, which can be classified into control-plane functional entities and data-plane functional entities.

The user plane network element 130 serves as an interface to a data network, and implements functions such as user plane data forwarding, session-level or flow-level charging statistics, and bandwidth throttling, that is, packet routing and forwarding, handling of quality of service (quality of service, QoS) of user plane data, and the like. In the 5G communication system, the user plane network element may be a user plane function (user plane function, UPF) network element.

The data network 140 provides, for example, an operator service, an Internet access service, or a third-party service, and includes a server, where the server implements video source encoding, rendering, and the like. In the 5G communication system, the data network may be a data network (data network, DN).

The mobility management network element 150 is mainly configured to perform mobility management, access management, and the like. In the 5G communication system, the access management network element may be an access and mobility management function (access and mobility management function, AMF), and mainly performs functions such as mobility management and access authentication/authorization. In addition, the terminal is further responsible for transferring a user policy between a terminal and a policy control function (policy control function, PCF) network element.

The session management network element 160 is mainly configured to: manage a session, allocate and manage an internet protocol (internet protocol, IP) address of user equipment, select an endpoint that can manage a user plane function interface and a policy control and charging function interface, perform downlink data notification, and the like. In the 5G communication system, the session management network element may be a session management function (session management function, SMF) network element, and implements IP address allocation for a terminal, UPF selection, charging, QoS policy control, and the like.

The new radio is a radio link between a terminal device and a network device.

An Xn interface is an interface between network devices and is used for signaling exchange such as handovers.

An NG interface is an interface between the network device and the core network to exchange signaling such as NAS signaling of the core network and user service data.

In a future communication system, for example, a 6G communication system, the foregoing network element or device may still use a name of the network element or device in the 5G communication system, or may have another name. This is not limited in embodiments of the application. The functions of the network elements or devices may be implemented by one independent network element, or may be jointly implemented by several network elements. During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of the application.

It may be understood that FIG. 1 is merely an example, and does not constitute any limitation on the protection scope of the application. The communication method provided in embodiments of the application may further involve a network element that is not shown in FIG. 1. Certainly, the communication method provided in embodiments of the application may alternatively include only some network elements shown in FIG. 1.

It may be understood that the foregoing network architecture used in embodiments of the application is merely an example, and a network architecture applicable to embodiments of the application is not limited thereto. Any network architecture that can implement functions of the foregoing network elements is applicable to embodiments of the application.

The technical solutions in embodiments of the application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or a future evolved communication system, vehicle-to-X (vehicle-to-X V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), an internet of vehicles, machine type communication (machine type communication, MTC), an internet of things (Internet of things, IoT), long term evolution-machine (long term evolution-machine, LTE-M), machine-to-machine (machine-to-machine, M2M), and the like.

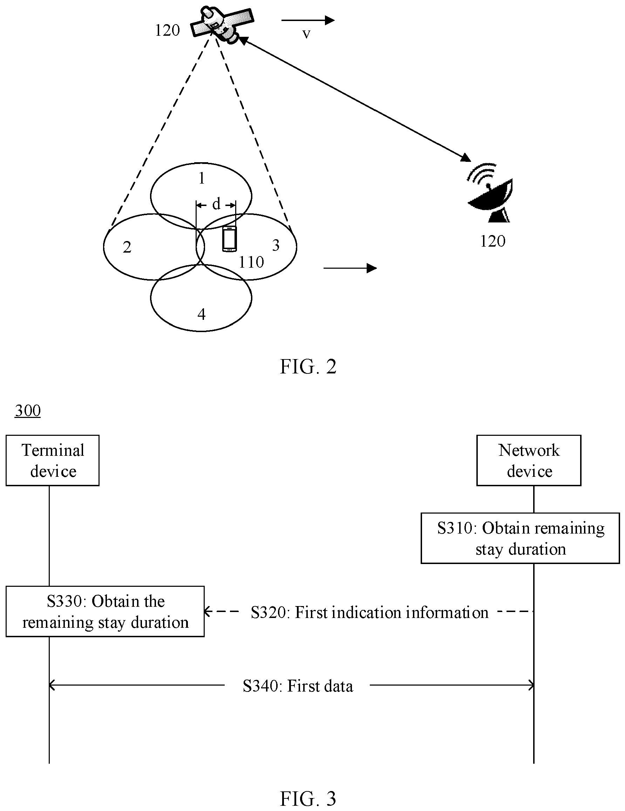

Due to motion of a satellite, beams are frequently switched. As shown in FIG. 2, a satellite provides beams with four coverage areas. A coverage area of a beam 1 is a circle 1, a coverage area of a beam 2 is a circle 2, a coverage area of a beam 3 is a circle 3, and a coverage area of a beam 4 is a circle 4. It is assumed that at a moment, a terminal device 110 is within the coverage area of the beam 3, and the satellite communicates with the terminal device 110 through the beam 3. However, due to motion of the satellite, the terminal device 110 is within the coverage area of the beam 2 after a period of time. It can be learned that beam switching occurs in this process. If at a moment of beam switching, communication of a piece of data is interrupted by beam switching, the data may fail to be decoded, and therefore re-communication may be performed, and a network throughput is reduced.

Especially, when satellite communication is applied to an IoT scenario, that is, in an IoT non-terrestrial network (NTN, non-terrestrial network), a terminal device in the internet of things performs repeated communication in a data communication process. Therefore, duration of a transport block of the data is long. In this scenario, communication of the data is more likely to be interrupted by beam switching, so that the foregoing problem is caused.

FIG. 3 is a flowchart of a data communication method according to an embodiment of the application. As shown in FIG. 3, the method 300 includes the following steps.

Step S310: A network device obtains remaining stay duration of a terminal device on a first beam.

It should be understood that the first beam is a beam used by the network device to communicate with the terminal device at a moment. In this case, the terminal device is within a coverage area of the first beam. The remaining stay duration is duration between the moment and a moment at which the network device switches the first beam to a second beam. The moment may be a moment at which it is determined that data communication occurs between the network device and the terminal device, or may be a moment at which the network device obtains the remaining stay duration of the terminal device on the first beam.

Optionally, the remaining stay duration is determined based on at least one of the following: relative locations of the terminal device and the network device, a moving speed of the network device, and the coverage area of the first beam.

For example, the network device obtains a location of the terminal device (which may be reported by the terminal device), a moving speed v and a location of the network device (satellite), a span and a tilt angle θ of the first beam, and determines the remaining stay duration t of the terminal device on the first beam.

As shown in FIG. 2, the network device may calculate a distance d between the network device and an edge of the first beam based on the location of the terminal device, the tilt angle θ of the first beam, and the span of the first beam, and calculate round trip time (round trip time, RTT) based on the relative location of the terminal device and the network device. With reference to the moving speed v of the network device, the remaining stay duration t is calculated according to the following formula:

$$t = \frac{d}{v} cos\theta - \frac{RTT}{2}$$

Step S340: If determining that the communication of the first data is not completed within the remaining stay duration, the network device and the terminal device communicate the first data on a target time domain resource, where the target time domain resource is determined based on a first time domain resource indicated by the network device and the remaining stay duration.

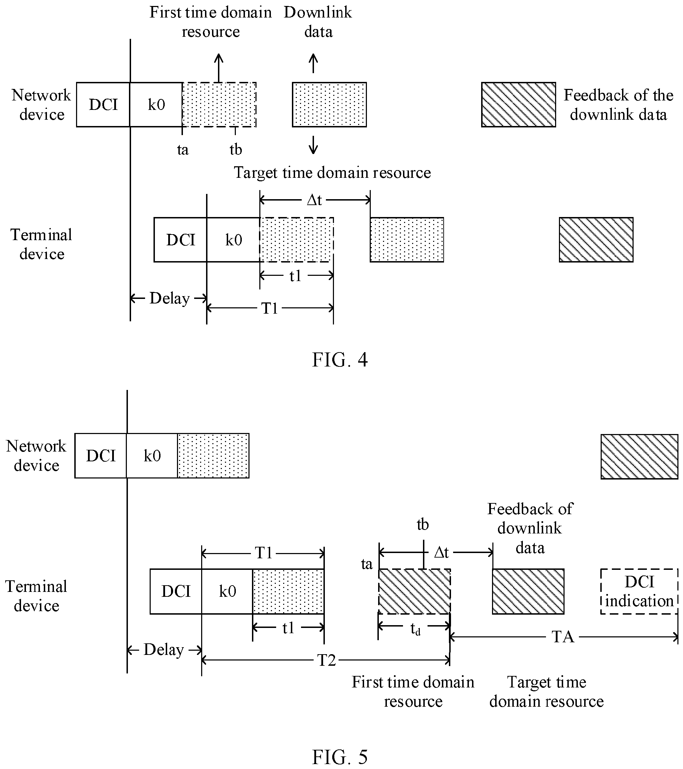

That the communication of the first data is not completed within the remaining stay duration may be understood as that the communication of the first data is not completed within the remaining stay duration, or communication of a feedback of the first data is not completed within the remaining stay duration. The first time domain resource may be understood as a time domain resource used by the network device to schedule the first data if beam switching does not occur from a start of the communication of the first data to an end of the communication of the first data. As shown in FIG. 4, the time domain resource used by the network device to schedule the first data in downlink control information is the first time domain resource. However, beam switching may occur in a time period in which the first time domain resource is located. Therefore, the first data is communicated by using the target time domain resource. The target time domain resource may be determined based on the first time domain resource and the remaining stay duration.

Optionally, the network device determines, based on the remaining stay duration and at least one of the following, that the communication of the first data is not completed within the remaining stay duration t:

duration T1 between first time and second time, where the first time corresponds to time at which the terminal device receives scheduling information of the first data, the scheduling information includes the first time domain resource, and the second time corresponds to an end location of the first time domain resource on which the terminal device communicates the first data; and
duration T2 between the first time and third time, where the third time corresponds to an end location of a time domain resource occupied by feedback information that is of the first data and that is determined based on the scheduling information.

It should be understood that the first time, the second time, and the third time are based on time on the terminal device side. The first time may be a start moment at which the scheduling information of the first data is received, or may be an end moment at which the scheduling information of the first data is received, or may be any moment between a start moment and an end moment at which the scheduling information of the first data is received. This is not limited in the application.

Optionally, the network device determines that the communication of the first data is not completed within the remaining stay duration t if one or more of the following are met:

$$t < T1;$$

and

$$T2 - t_d < t < T2,$$

where $t_d$ is duration corresponding to the first time domain resource.

Optionally, before step S340, the method 300 further includes:
Step S320: The network device sends first indication information to the terminal device, where the first indication information indicates time information, and the time information is used with the first time domain resource to determine the target time domain resource. Correspondingly, the terminal device obtains the first indication information.

Optionally, the first indication information further includes an identification field, and the identification field indicates that the time information is used to: communicate the first data, or communicate the feedback information of the first data.

In a possible implementation, the time information includes the remaining stay duration.

In another possible implementation, the time information includes a difference between the remaining stay duration and any one of the following:

the duration T1 between the first time and the second time; and

the duration T2 between the first time and the third time.

In still another possible implementation, the time information includes $\Delta t$, and $\Delta t$ is not equal to the remaining stay duration.

It should be understood that $\Delta t$ is used to determine the target time domain resource, and $\Delta t$ may be a difference between initial time at which the first data is communicated based on the scheduling information and time at which the communication of the first data is interrupted by beam switching. Certainly, $\Delta t$ may alternatively be greater than the difference between the initial time at which the first data is communicated based on the scheduling information and the time at which the communication of the first data is interrupted by beam switching.

Optionally, $\Delta t$ is less than the remaining stay duration.

Step S330: The terminal device obtains the first indication information, where the first indication information indicates the time information, and the time information is related to the remaining stay duration of the terminal device on the first beam.

For example, the terminal device may obtain or receive the first indication information in step S320.

If determining that the communication of the first data is not completed within the remaining stay duration, the terminal device determines the target time domain resource based on the time information and the first time domain resource indicated by the network device, and communicates the first data to the network device on the determined target time domain resource.

Optionally, the first data is downlink data, a feedback of downlink data, or uplink data.

Optionally, the terminal device determines, based on the remaining stay duration and at least one of the following, that the communication of the first data is not completed within the remaining stay duration t:

the duration T1 between the first time and the second time, where the first time corresponds to the time at which the terminal device receives the scheduling information of the first data, the scheduling information includes the first time domain resource, and the second time corresponds to the end location of the first time domain resource on which the terminal device communicates the first data; and

the duration T2 between the first time and the third time, where the third time corresponds to the end location of the time domain resource occupied by the feedback information that is of the first data and that is determined based on the scheduling information.

Optionally, the terminal device determines that the communication of the first data is not completed within the remaining stay duration t if one or more of the following are met:

$$t < T1;$$

and

$$T2 - t_d < t < T2,$$

where $t_d$ is duration corresponding to the first time domain resource.

In a possible implementation, the time information indicated by the first indication information is the remaining stay duration.

In another possible implementation, the time information indicated by the first indication information includes a difference between the remaining stay duration and any one of the following:

the duration T1 between the first time and the second time; and

the duration T2 between the first time and the third time.

In still another possible implementation, the time information indicated by the first indication information includes $\Delta t$, and $\Delta t$ is not equal to the remaining stay duration.

Optionally, $\Delta t$ is less than the remaining stay duration.

Optionally, the first indication information further includes an identification field, and the identification field indicates that the time information is used to: communicate the first data, or communicate the feedback information of the first data.

If the first indication information does not include the identification field, that the terminal device communicates the first data on a target time domain resource includes:

if the terminal device determines that the remaining stay duration t meets t<T1, the terminal device communicates the first data on the target time domain resource; and

if the terminal device determines that the remaining stay duration t meets $T2-t_d<t<T2$, the terminal device communicates the feedback information of the first data on the target time domain resource.

Optionally, the first data is downlink data, a feedback of downlink data, or uplink data.

According to the data communication method provided in embodiments of the application, it may be determined whether beam switching occurs in a time period for communicating the first data. If beam switching occurs, communication of the first data (including receiving or sending of the first data) is delayed to be after beam switching, to avoid communicating the first data at a moment of beam switching. This solution can improve the network throughput.

The following describes a specific implementation of the method 300 by using an example in which the first data is downlink data or a feedback of downlink data.

As shown in FIG. 4, there is a specific delay on the terminal device side, and duration in which the network device schedules the downlink data is t1. In FIG. 4, an NB IoT scenario is used as an example, and downlink control information (downlink control information, DCI) is used as an example of scheduling information of the downlink data. The downlink data may be carried on a narrowband physical downlink shared channel (narrowband physical downlink shared channel, NPDSCH).

The downlink control information of NB IoT and the downlink data scheduled by NB IoT are not multiplexed in frequency domain. In other words, the downlink control information and the downlink data scheduled by NB IoT are not simultaneously sent in a same subframe. The downlink control information and the downlink data scheduled by NB IoT are multiplexed in a time division manner. A scheduling delay field in a DCI format N1 of the downlink control information indicates a delay k0 of the downlink data scheduled by the downlink control information. A maximum value of k0 is 128. In addition, a resource assignment field in the DCI indicates a quantity of subframes occupied by the downlink data. A repetition number field indicates a quantity of repetitions of the downlink data, with a maximum value of 2048. The quantity of repetitions is indicated by a higher layer parameter ack-NACK-NumRepetitions.

An HARQ-ACK resource field indicates a receive end to feed back, after the downlink data is received on a subframe, an acknowledgment/negative acknowledgment (acknowledgment/negative acknowledgment, ACK/NACK) on a subsequent subframe that is separated from the subframe by k1, where the ACK/NACK is communicated on a narrowband physical uplink shared channel (narrowband physical uplink shared channel, NPUSCH) in a format 2.

In addition, to implement time synchronization of data communicated by the terminal device on different frequency domain resources to the network device, the terminal device needs to send uplink data (for example, an ACK/NACK) in advance based on round trip time, and advance time is referred to as a timing advance (timing advance, TA). However, in satellite communication, round trip time is longer than that of a ground, and therefore, a TA value may also be large. To avoid that time for sending the uplink data is earlier than time for receiving the control information or the downlink data, an additional indication koffset is introduced for scheduling the uplink data. In other words, an interval at which the network device schedules feedbacks of the uplink data is actually k1+koffset, and the terminal device actually sends the uplink feedback after an interval of k1+koffset-TA after the downlink data is received.

$t1 = N_{TB}N_{Rep}N_{SF}$, where $N_{TB}$ is a quantity of transport blocks (transport block, TB) in each PDSCH, $N_{Rep}$ is a quantity of repetitions, and $N_{SF}$ is a quantity of subframes occupied by downlink data. $N_{TB}$, $N_{Rep}$, and $N_{SF}$ are determined by a corresponding domain in a format, namely, a DCI format N1, of a narrowband physical downlink control channel (narrowband physical downlink control channel, NPDCCH) that carries DCI for scheduling downlink data.

It should be understood that, during downlink data communication, a downlink gap (DL gap) may be inserted. A start location and a period of the DL gap are configured by the network device. In this case, $t1 = N_{TB}N_{Rep}N_{SF} + t_{DL\,gap}$, where $t_{DL\,gap}$ is duration of the DL gap.

For the downlink data:

The network device or the terminal device determines, based on t<T1, that communication of the downlink data is not completed within a remaining stay duration t, where T1 is duration between first time and second time, the first time corresponds to time at which the terminal device receives the DCI, and the second time corresponds to an end location that is of the first time domain resource for communicating the first data and that is indicated by the terminal device based on the DCI, where T1= t1+k0.

When the network device determines that the communication of the downlink data is not completed within the remaining stay duration t, the network device may determine a target time domain resource for communicating the downlink data. The target time domain resource is located after beam switching. Then, the terminal device is notified of the time information based on the first indication information. The time information is used by the terminal device to determine the target time domain resource for communicating the downlink data.

In a possible implementation, the time information indicated by the first indication information is the remaining stay duration.

If it is assumed that when the first indication information does not include an identification field indicating that the time information is used to communicate the downlink data or is used to communicate the feedback information of the downlink data, after receiving the first indication information, the terminal device determines, based on t<T1, that the time information is used to determine the target time domain resource for receiving the downlink data.

In another possible implementation, the time information Δt indicated by the first indication information includes a difference between the remaining stay duration and T1, that is, Δt=T1-t.

Optionally, the first indication information includes the identification field indicating that the time information is used to communicate the downlink data or is used to communicate the feedback information of the downlink data.

For example, 1 bit in the first indication information is used as a flag of the identification field, and flag=0 indicates that the terminal device receives the downlink data at a delay of T1-Δt based on the first time domain resource, in other words, a receiving occasion of the downlink data is scheduled after beam switching.

In still another possible implementation, the time information Δt indicated by the first indication information is not equal to the remaining stay duration t.

For example, Δt is less than the remaining stay duration. It is assumed that, as shown in FIG. 4, an initial time at which the downlink data is communicated based on the scheduling information is an initial time ta of the first time domain resource, and time at which beam switching occurs is tb. In this case, Δt may be duration between tb and ta. Certainly, Δt may alternatively be greater than the duration between tb and ta. This is not limited in the application.

Optionally, the first indication information includes the identification field indicating that the time information is used to communicate the downlink data or is used to communicate the feedback information of the downlink data.

For example, 1 bit in the first indication information is used as a flag of the identification field, and flag=0 indicates that the terminal device receives the downlink data at a delay of Δt based on the first time domain resource, that is, a receiving occasion of the downlink data is scheduled after beam switching.

For the feedback of the downlink data, as shown in FIG. 5:

The network device or the terminal device determines, based on T2-$t_d$<t<T2, that communication of the feedback of the downlink data is not completed within the remaining stay duration t, where T2 is duration between the first time and third time, the first time corresponds to time at which the terminal device receives the DCI, and the third time corresponds to an end location T2=T1 +k1 +koffset- TA+td of the time domain resource occupied by the feedback information that is of the downlink data and that is determined based on the first time domain resource indicated by the DCI. Duration corresponding to the first time domain resource $t$d = $NN_{TB}N_{REP}^{AN}N_{slots}^{UL}$, where $N_{TB}$ is a quantity of TBs in one PUSCH, $N_{REP}^{AN}$ is a quantity of repetitions, $N_{slots}^{UL}$ is a quantity of uplink slots occupied by the feedback of the downlink data, $N_{TB}$ is determined by the corresponding domain in the DCI format N1 for scheduling the downlink data, and $N_{REP}^{AN}$ is configured by a higher layer parameter ack-NACK-NumRepetitions. $N_{slots}^{UL} =$ 4 (for example), where N is determined by a time-frequency resource allocated in the DCI. When subcarrier spacing is 3.75 kHz, $N = 2$. When the subcarrier spacing is 15 kHz, $N = 0.5$.

It should be understood that a UL gap may be inserted during the communication of the uplink data (the feedback of the downlink data). For example, a 40 ms uplink gap (UL gap) may be added after 256 ms of continuous communication. In this case,

$$t2 = NN_{TB}N_{REP}^{AN}N_{slots}^{UL} + t_{UL\ gap},$$ where $t_{UL\ gap}$ is duration of the UL gap.

When the network device determines that the communication of the feedback of the downlink data is not completed within the remaining stay duration t, the network device may determine a target time domain resource (as shown in FIG. 5) for communicating the feedback of the downlink data. The target time domain resource is located after beam switching. Then, the terminal device is notified of the time information based on the first indication information. The time information is used by the terminal device to determine the target time domain resource for communicating the feedback of the downlink data.

In a possible implementation, the time information Δt indicated by the first indication information is the remaining stay duration t.

If it is assumed that when the first indication information does not include an identification field indicating that the time information is used to communicate the downlink data or is used to communicate the feedback information of the downlink data, after receiving the first indication information, the terminal device determines, based on T2-td<t<T2, that the time information is used to determine the target time domain resource for sending the feedback of the downlink data.

After receiving the first indication information, the terminal device determines that the remaining stay duration t is used to send the feedback of the downlink data, then delays t-T1 based on the first time domain resource (as shown in FIG. 5), and schedules a sending time of the feedback of the downlink data after beam switching. It should be understood that the first time domain resource is a time domain resource that is determined by the terminal device based on scheduling of the DCI and that is used for sending the feedback of the downlink data.

In another possible implementation, the time in-

formation $\Delta t$ indicated by the first indication information includes a difference between the remaining stay duration and T2, that is, $\Delta t=T2-t$.

Optionally, the first indication information includes the identification field indicating that the time information is used to communicate the downlink data or is used to communicate the feedback information of the downlink data.

For example, 1 bit in the first indication information is used as a flag of the identification field, and flag=1 indicates that the terminal device sends the feedback of the downlink data at a delay of T2-T1-$\Delta t$ based on the first time domain resource, that is, a sending occasion of the feedback of the downlink data is scheduled after beam switching.

In still another possible implementation, the time information $\Delta t$ indicated by the first indication information is not equal to the remaining stay duration t.

For example, $\Delta t$ is less than the remaining stay duration. It is assumed that, as shown in FIG. 5, initial time at which the feedback of the downlink data is communicated based on the scheduling information is initial time ta of the first time domain resource, and time at which beam switching occurs is tb. In this case, $\Delta t$ may be duration between tb and ta. Certainly, $\Delta t$ may alternatively be greater than the duration between tb and ta. This is not limited in the application.

Optionally, the first indication information includes the identification field indicating that the time information is used to communicate the downlink data or is used to communicate the feedback information of the downlink data.

For example, 1 bit in the first indication information is used as a flag of the identification field, and flag=1 indicates that the terminal device sends the feedback of the downlink data at a delay of $\Delta t$ based on the first time domain resource, that is, a sending occasion of the feedback of the downlink data is scheduled after beam switching.

It should be understood that, if the terminal device does not receive the time information indicated by the first indication information, the terminal device receives the downlink data based on the first time domain resource indicated by the DCI, and sends the feedback of the downlink data.

The following describes a specific implementation of the method 300 by using an example in which the first data is uplink data.

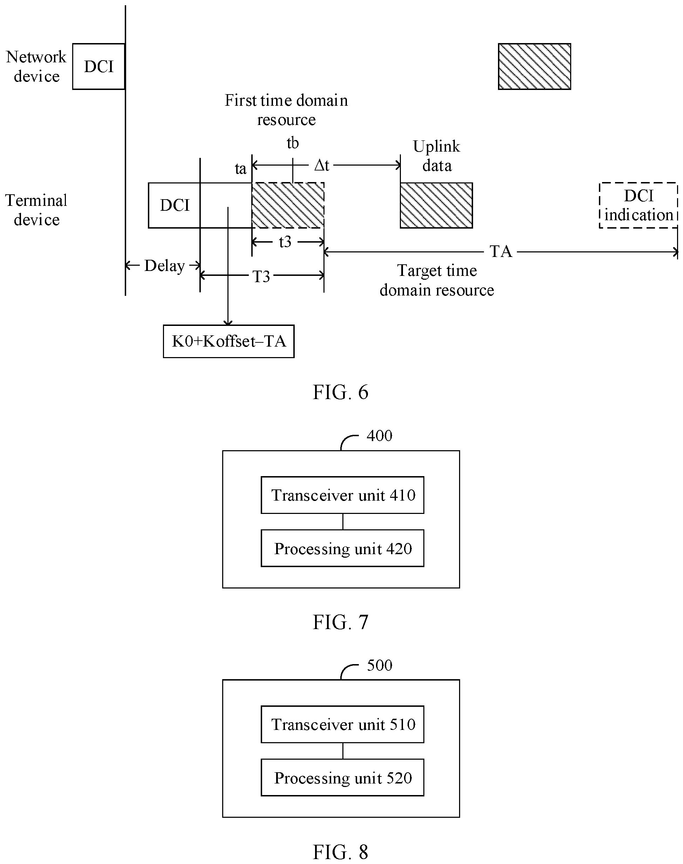

As shown in FIG. 6, an NB IoT scenario is also used as an example. For example, duration of uplink data scheduled by the network device is t3, and scheduling information of the uplink data is DCI. The uplink data may be carried on a narrowband physical uplink shared channel (narrowband physical uplink shared channel, NPUSCH).

For an uplink HARQ process of NB IoT, a format of a narrowband physical uplink control channel (narrowband physical uplink control channel, NPUCCH) that carries the DCI for scheduling the uplink data is a DCI format N0. A scheduling delay field of the DCI indicates a time interval, namely, k0, at which the network device expects to receive the uplink data after sending the DCI. Similar to a downlink HARQ process, in an IoT NTN, an interval between the DCI and the uplink data scheduled by the DCI is actually k0+koffset. Therefore, an actual interval between receiving the DCI and sending the uplink data by the terminal device is k0+koffset-TA.

$$t3 = \frac{1}{2}N_{TB}N_{\text{Rep}}N_{RU}N_{slots}^{RU}$$ , where $N_{TB}$ is a quantity of TBs in the PUSCH, $N_{\text{Rep}}$ is a quantity of repetitions, $N_{RU}$ is a quantity of occupied resource units (resource unit, RU), and $N_{slots}^{RU}$ is a quantity of slots occupied by one RU. In addition, $N_{TB}$, $N_{\text{Rep}}$, $N_{RU}$, and $N_{slots}^{RU}$ are determined by a corresponding domain in the DCI for scheduling the uplink data.

It should be understood that, during communication of the uplink data, a UL gap may be inserted into the NPUSCH of the uplink data. For example, a 40 ms UL gap may be added after 256 ms of continuous communication of the uplink data. In this case,

$$t3 = \frac{1}{2}N_{TB}N_{\text{Rep}}N_{RU}N_{slots}^{RU} + t_{UL\ gap},$$ where $t_{UL\ gap}$ is duration of the UL gap.

The network device or the terminal device determines, based on t<T3, that the communication of the uplink data is not completed within remaining stay duration t, where T3 indicates a time interval from time at which the terminal device receives the DCI for scheduling the uplink data to time at which sending of the NPUSCH of the uplink data is completed (that is, an end location of the first time domain resource). T3=k0+koffset-TA+ t3.

Then, the network device notifies the terminal device of the time information based on the first indication information. The time information is used by the terminal device to determine a target time domain resource for communicating the uplink data, so that sending time of the uplink data is after beam switching.

In a possible implementation, the time information $\Delta t$ indicated by the first indication information includes the remaining stay duration t.

After receiving the first indication information, the terminal device determines, based on t<T3, that the communication of the uplink data is not completed within the remaining stay duration t, determines to delay t based on the first time domain resource (as shown in FIG. 6), and schedules the sending time of the uplink data after beam switching. It should be understood that the first time domain resource is a time domain resource that is determined by the terminal device based on scheduling of the DCI and that is used for sending the uplink data.

In another possible implementation, the time information $\Delta t$ indicated by the first indication information includes a difference between the remaining stay duration and T3, that is, $\Delta t = T3-t$.

The first indication information indicates the terminal device to send the uplink data at a delay of $T3-\Delta t$ based on the first time domain resource, that is, a sending occasion of the uplink data is scheduled after beam switching.

In still another possible implementation, the time information $\Delta t$ indicated by the first indication information is not equal to the remaining stay duration t.

For example, $\Delta t$ is less than the remaining stay duration. It is assumed that, as shown in FIG. 6, initial time at which the uplink data is communicated based on the scheduling information is initial time ta of the first time domain resource, and time at which beam switching occurs is tb. In this case, $\Delta t$ may be duration between tb and ta. Certainly, $\Delta t$ may alternatively be greater than the duration between tb and ta. This is not limited in the application.

Optionally, the first indication information includes the identification field indicating that the time information is used to communicate the downlink data or is used to communicate the feedback information of the downlink data.

The first indication information indicates the terminal device to send the uplink data at a delay of $\Delta t$ based on the first time domain resource, that is, a sending occasion of the uplink data is scheduled after beam switching.

It should be understood that, if the terminal device does not receive the time information indicated by the first indication information, the terminal device sends the uplink data based on the first time domain resource indicated by the DCI.

Optionally, the first indication information in embodiments of the application includes but is not limited to radio resource control (radio resource control, RRC) signaling, DCI, a MAC control element (MAC control element, MAC CE), or the like.

It should be understood that steps shown in dotted lines in the flowchart 3 are optional steps, and a sequence of the steps is determined based on internal logic of the method. A sequence number shown in FIG. 3 is merely an example, and does not limit a sequence of the steps in the application.

It should be further understood that the methods provided in embodiments of the application may be used independently, or may be used together. This is not limited in the application.

It should be noted that an execution body shown in FIG. 3 is merely an example, and the execution body may alternatively be a chip, a chip system, or a processor that supports the execution body in implementing the method shown in FIG. 3. This is not limited in the application.

The foregoing describes the method embodiments in embodiments of the application with reference to the accompanying drawings, and the following describes apparatus embodiments in embodiments of the application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, methods and operations implemented by the terminal device may further be implemented by a component (for example, a chip or a circuit) that may be used in the terminal device, and methods and operations implemented by the network device may further be implemented by a component (for example, a chip or a circuit) that may be used in the network device.

The foregoing mainly describes the solutions provided in embodiments of the application from a perspective of interaction between network elements. It may be understood that, to implement the foregoing functions, each network element such as a transmitter device or a receiver device includes a corresponding hardware structure and/or software module for performing each function. A person skilled in the art should be able to be aware that, in combination with units and algorithm steps of the examples described in embodiments disclosed in this specification, the application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the application.

In embodiments of the application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software function module. It should be noted that, in embodiments of the application, module division is an example, and is merely a logical function division. In actual implementation, another division manner may be used. An example in which each function module is obtained through division based on each corresponding function is used below for description.

FIG. 7 is a schematic block diagram of a communication apparatus according to an embodiment of the application. The communication apparatus 400 may include a transceiver unit 410 and a processing unit 420. The transceiver unit 410 may communicate with the outside, and the processing unit 420 is configured to perform data processing. The transceiver unit 410 may also be referred to as a communication interface or a communication unit.

Optionally, the communication apparatus 400 may further include a storage unit. The storage unit may be configured to store instructions and/or data. The processing unit 420 may read the instructions and/or the data in the storage unit.

In a design, the communication apparatus 400 may be a terminal device, the transceiver unit 410 is configured to perform a receiving or sending operation of the terminal device in the foregoing method embodiments, and the processing unit 420 is configured to perform an internal processing operation of the terminal device in the foregoing method embodiments.

In another design, the communication apparatus 400 may be a device including a terminal device. Alternatively, the communication apparatus 400 may be a component configured in a terminal device, for example, a chip in the terminal device. In this case, the transceiver unit 410 may be an interface circuit, a pin, or the like. Specifically, the interface circuit may include an input circuit and an output circuit, and the processing unit 420 may include a processing circuit.

In a possible implementation, the transceiver unit 410 is configured to obtain first indication information, where the first indication information indicates time information, and the time information is related to remaining stay duration of the terminal device on a first beam. The processing unit 420 is configured to: when determining that communication of first data is not completed within the remaining stay duration, determine a target time domain resource based on the time information and a first time domain resource indicated by a network device. The transceiver unit 410 is further configured to communicate the first data on the target time domain resource.

In a possible implementation, the processing unit 420 is further configured to determine that the communication of the first data is not completed within the remaining stay duration based on the remaining stay duration and at least one of the following:

duration between first time and second time, where the first time corresponds to time at which the terminal device receives scheduling information of the first data, the scheduling information includes the first time domain resource, and the second time corresponds to an end location of the first time domain resource on which the terminal device communicates the first data; and

duration between the first time and third time, where the third time corresponds to an end location of a time domain resource occupied by feedback information that is of the first data and that is determined based on the scheduling information.

In a possible implementation, the processing unit 420 determines that the communication of the first data is not completed within the remaining stay duration $t$ if at least one of the following is met: $t<T1$, where T1 is the duration between the first time and the second time;

and $T2-t_d<t<T2$, where T2 is the duration between the first time and the third time, and $t_d$ is duration corresponding to the first time domain resource.

In a possible implementation, the time information is the remaining stay duration.

In a possible implementation, the transceiver unit 410 is further configured to obtain the scheduling information of the first data at the first time, where the scheduling information includes the first time domain resource, and the time information includes a difference between the remaining stay duration of the terminal device on the first beam and any one of the following:

the duration between the first time and the second time, where the second time corresponds to the end location of the first time domain resource on which the terminal device communicates the first data; and the duration between the first time and the third time, where the third time corresponds to the end location of the time domain resource occupied by the feedback information that is of the first data and that is determined based on the scheduling information.

In a possible implementation, the time information includes $\Delta t$, where $\Delta t$ is less than the remaining stay duration.

In a possible implementation, the first indication information further includes an identification field, and the identification field indicates that the time information is used to: communicate the first data, or communicate a feedback of the first data.

In a possible implementation, if the processing unit 420 determines that the remaining stay duration $t$ meets $t<T1$, the transceiver unit 410 communicates the first data on the target time domain resource, where T1 is the duration between the first time and the second time, the first time corresponds to the time at which the terminal device receives the scheduling information of the first data, the scheduling information includes the first time domain resource, and the second time corresponds to the end location of the first time domain resource on which the terminal device communicates the first data; and if the terminal device determines that the remaining stay duration $t$ meets $T2-t_d<t<T2$, the terminal device communicates the feedback information of the first data on the target time domain resource, where T2 is the duration between the first time and the third time, the third time corresponds to the end location of the time domain resource occupied by the feedback information that is of the first data and that is determined based on the scheduling information, and $t_d$ is the duration corresponding to the first time domain resource.

FIG. 8 is a schematic block diagram of a communication apparatus according to an embodiment of the application. The communication apparatus 500 includes a transceiver unit 510 and a processing unit 520. The transceiver unit 510 may communicate with the outside, and the processing unit 520 is configured to perform data processing. The transceiver unit 510 may also be referred to as a communication interface or a communication unit.

Optionally, the communication apparatus 500 may further include a storage unit. The storage unit may be configured to store instructions and/or data. The processing unit 520 may read the instructions and/or the data in the storage unit.

In a design, the communication apparatus 500 may be a network device, the transceiver unit 510 is configured to perform a receiving or sending operation of the network device in the foregoing method embodiments, and the processing unit 520 is configured to perform an internal processing operation of the network device in the foregoing method embodiments.

In another design, the communication apparatus 500 may be a device including a network device. Alternatively, the communication apparatus 500 may be a component configured in a network device, for example, a chip in the network device. In this case, the transceiver unit 510 may be an interface circuit, a pin, or the like. Specifically, the interface circuit may include an input circuit and an output circuit, and the processing unit 520 may include a processing circuit.

In a possible implementation, the processing unit 520 is configured to obtain remaining stay duration of a terminal device on a first beam. The processing unit 520 is further configured to: when determining that communication of first data is not completed within the remaining stay duration, control the transceiver unit 510 to communicate the first data on a target time domain resource, where the target time domain resource is determined based on a first time domain resource indicated by the network device and the remaining stay duration.

In a possible implementation, the transceiver unit 510 is further configured to send first indication information, where the first indication information indicates time information, and the time information is used with the first time domain resource to determine the target time domain resource.

In a possible implementation, the processing unit 520 is further configured to determine, based on the remaining stay duration and at least one of the following, that the communication of the first data is not completed within the remaining stay duration: duration between first time and second time, where the first time corresponds to time at which the terminal device receives scheduling information of the first data, the scheduling information includes the first time domain resource, and the second time corresponds to an end location of the first time domain resource on which the terminal device communicates the first data; and duration between the first time and third time, where the third time corresponds to an end location of a time domain resource occupied by feedback information that is of the first data and that is determined based on the scheduling information.

In a possible implementation, the processing unit 520 determines that the communication of the first data is not completed within the remaining stay duration t if one or more of the following are met: $t<T1$, where T1 is the duration between the first time and the second time; and $T2-t_d<t<T2$, where T2 is the duration between the first time and the third time, and $t_d$ is duration corresponding to the first time domain resource.

In a possible implementation, the time information is the remaining stay duration.

In a possible implementation, the time information includes a difference between the remaining stay duration and any one of the following: the duration between the first time and the second time, where the first time corresponds to the time at which the terminal device receives the scheduling information of the first data, the scheduling information includes the first time domain resource, and the second time corresponds to the end location of the first time domain resource on which the terminal device communicates the first data; and the duration between the first time and the third time, where the third time corresponds to the end location of the time domain resource occupied by the feedback information that is of the first data and that is determined based on the scheduling information.

In a possible implementation, the time information includes $\Delta t$, where $\Delta t$ is less than the remaining stay duration.

In a possible implementation, the first indication information further includes an identification field, and the identification field indicates that the time information is used to: communicate the first data, or communicate the feedback information of the first data information.

In a possible implementation, the remaining stay duration is determined based on at least one of the following: relative locations of the terminal device and the network device, a moving speed of the network device, and the coverage area of the first beam.

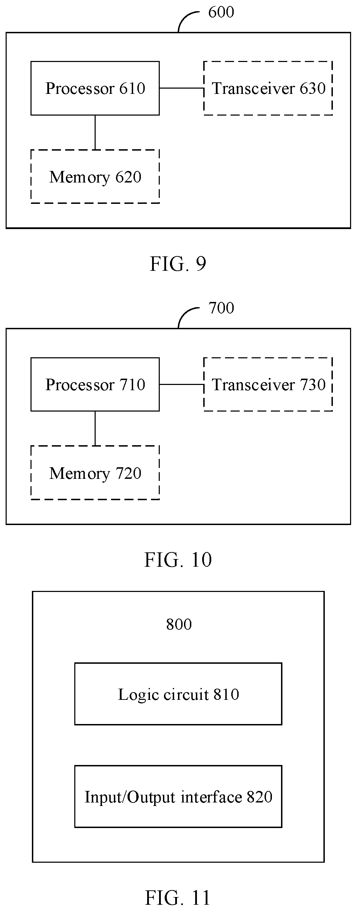

As shown in FIG. 9, an embodiment of the application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the methods in the foregoing method embodiments are performed.

Optionally, the communication apparatus 600 includes one or more processors 610.

Optionally, as shown in FIG. 9, the communication apparatus 600 may further include the memory 620.

Optionally, the communication apparatus 600 may include one or more memories 620.

Optionally, the memory 620 and the processor 610 may be integrated, or separately disposed.

Optionally, as shown in FIG. 9, the communication apparatus 600 may further include a transceiver 630 and/or a communication interface. The transceiver 630 and/or the communication interface are/is configured to receive and/or send a signal. For example, the processor 610 is configured to control the transceiver 630 and/or the communication interface to receive and/or send the signal.

In a solution, the communication apparatus 600 is configured to perform operations performed by the terminal device in the foregoing method embodiments. For example, the processor 610 is configured to implement an operation performed internally by the terminal device in the foregoing method embodiments, and the transceiver 630 is configured to implement a receiving or sending operation performed by the terminal device in the foregoing method embodiments. The processing unit 420 in the apparatus 400 may be the processor in FIG. 9, and the transceiver unit 410 may be the transceiver in FIG. 9. For specific operations performed by the processor 610, refer to the foregoing descriptions of the processing unit 420. For operations performed by the transceiver 630, refer to the descriptions of the transceiver unit 410. Details are not described herein again.

As shown in FIG. 10, an embodiment of the application further provides a communication apparatus 700. The communication apparatus 700 includes a processor 710. The processor 710 is coupled to a memory 720. The memory 720 is configured to store a computer program or instructions, and/or data. The processor 710 is configured to execute the computer program or instructions, and/or the data stored in the memory 720, to perform the method in the method embodiments.

Optionally, the communication apparatus 700 includes one or more processors 710.

Optionally, as shown in FIG. 10, the communication apparatus 700 may further include the memory 720.

Optionally, the communication apparatus 700 may include one or more memories 720.

Optionally, the memory 720 and the processor 710 may be integrated, or separately disposed.

Optionally, as shown in FIG. 10, the communication apparatus 700 may further include a transceiver 730 and/or a communication interface. The transceiver 730 and/or the communication interface are/is configured to receive and/or send a signal. For example, the processor 710 is configured to control the transceiver 730 to receive and/or send a signal.

In a solution, the communication apparatus 700 is configured to perform operations performed by the network device in the foregoing method embodiments.

For example, the processor 710 is configured to implement an operation performed internally by the network device in the foregoing method embodiments, and the transceiver 730 is configured to implement a receiving or sending operation performed by the network device in the foregoing method embodiments. The processing unit 520 in the apparatus 500 may be the processor in FIG. 10, and the transceiver unit 510 may be the transceiver or a communication interface in FIG 10. For specific operations performed by the processor 710, refer to the foregoing descriptions of the processing unit 520. For operations performed by the transceiver 730, refer to the descriptions of the transceiver unit 510. Details are not described herein again. An embodiment of the application further provides a communication apparatus, including a processor. The processor is coupled to an input/output interface, and communicates data through the input/output interface. The processor is configured to perform the method in any one of the foregoing method embodiments.

As shown in FIG. 11, an embodiment of the application further provides a communication apparatus 800. The communication apparatus 800 includes a logic circuit 810 and an input/output interface (input/output interface) 820.

The logic circuit 810 may be a processing circuit in the communication apparatus 800. The logic circuit 810 may be coupled and connected to a storage unit, and invoke instructions in the storage unit, so that the communication apparatus 800 can implement the method and function in embodiments of the application. The input/output interface 820 may be an input/output circuit in the communication apparatus 800, and outputs information processed by the communication apparatus 800, or inputs to-be-processed data or signaling information into the communication apparatus 800 for processing.

In a solution, the communication apparatus 800 is configured to perform operations performed by the terminal device in the foregoing method embodiments.

For example, the logic circuit 810 is configured to implement a processing-related operation performed by the terminal device in the foregoing method embodiments, for example, a processing-related operation performed by the terminal device in the embodiment shown in FIG. 3. The input/output interface 820 is configured to implement an operation related to sending and/or receiving performed by the terminal device in the foregoing method embodiments, for example, the operation related to sending and/or receiving performed by the terminal device in the embodiment shown in FIG. 3. For specific operations performed by the logic circuit 810, refer to the foregoing descriptions of the processing unit 420. For operations performed by the input/output interface 820, refer to the foregoing descriptions of the transceiver unit 410. Details are not described herein again.

In another solution, the communication apparatus 800 is configured to perform operations performed by the network device in the foregoing method embodiments.

For example, the logic circuit 810 is configured to implement a processing-related operation performed by the network device in the foregoing method embodiments, for example, a processing-related operation performed by the network device in the embodiment shown in FIG. 3. The input/output interface 820 is configured to implement an operation related to sending and/or receiving performed by the network device in the foregoing method embodiments, for example, the operation related to sending and/or receiving performed by the network device in the embodiment shown in FIG. 3. For specific operations performed by the logic circuit 810, refer to the foregoing descriptions of the processing unit 520. For operations performed by the input/output interface 820, refer to the foregoing descriptions of the transceiver unit 510. Details are not described herein again.

It should be understood that, the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods may be completed by using an integrated logic circuit of hardware in the processor or by using instructions in a form of software. Steps of the methods disclosed with reference to embodiments of the application may be directly executed and accomplished by a hardware processor, or may be executed and accomplished by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor. To avoid repetition, details are not described herein again.

It should be noted that, the processor in embodiments of the application may be an integrated circuit chip, and has a signal processing capability. In an implementation process, steps in the foregoing method embodiments may be completed by using an integrated logic circuit of hardware in the processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or execute the methods, steps, and logical block diagrams disclosed in embodiments of the application. The general-purpose processor may be a microprocessor, or the processor may be any conventional processor or the like. Steps of the methods disclosed with reference to embodiments of the application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor.

It may be understood that the memory in embodiments of the application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory of the systems and methods described in this specification includes but is not limited to these and any other memories of appropriate types.

According to the method provided in embodiments of the application, the application further provides a computer-readable medium, and the computer-readable medium stores program code. When the program code is run on a computer, the computer is enabled to perform the method in the embodiment shown in FIG. 3. For example, when a computer program is executed by a computer, the computer is enabled to implement the method performed by the network device or the method performed by the terminal device in the foregoing method embodiments.

An embodiment of the application further provides a computer program product including instructions. When the instructions are executed by a computer, the computer is enabled to implement the method performed by the network device or the method performed by the terminal device in the foregoing method embodiments.

For explanations and beneficial effects of related content in any communication apparatus provided above, refer to the foregoing corresponding method embodiments. Details are not described herein again.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer instructions are loaded and executed on the computer, all or some of the procedures or functions according to embodiments of the application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with units and algorithm steps of the examples described in embodiments disclosed in this specification, the application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of the application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of the application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific embodiments of the application, but are not intended to limit the protection scope of the application. Any variation or replacement readily figured out by a person skilled in the art within the technical scope disclosed in the application shall fall within the protection scope of the application. Therefore, the protection scope of the application shall be subject to the protection scope of the claims.

### Claims

1. A data communication method, comprising:

    obtaining, by a terminal device, first indication information, wherein the first indication information indicates time information, and the time information is related to remaining stay duration of the terminal device on a first beam;
    if determining that communication of first data is not completed within the remaining stay duration, determining, by the terminal device, a target time domain resource based on the time information and a first time domain resource indicated by a network device; and
    communicating, by the terminal device, the first data on the target time domain resource.

2. The method according to claim 1, wherein the terminal device determines, based on the remaining stay duration and at least one of the following, that the communication of the first data is not completed within the remaining stay duration:

    duration between first time and second time, wherein the first time corresponds to time at which the terminal device receives scheduling information of the first data, the scheduling information comprises the first time domain resource, and the second time corresponds to an end location of the first time domain resource on which the terminal device communicates the first data; and
    duration between the first time and third time, wherein the third time corresponds to an end location of a time domain resource occupied by feedback information that is of the first data and that is determined based on the scheduling information.

3. The method according to claim 2, wherein it is determined that the communication of the first data is not completed within the remaining stay duration t if at least one of the following is met:

$$t < T1,$$

wherein T1 is the duration between the first time and the second time; and

$$T2 - t_d < t < T2,$$

wherein T2 is the duration between the first time and the third time, and $t_d$ is duration corresponding to the first time domain resource.

4. The method according to any one of claims 1 to 3, wherein the time information is the remaining stay duration.

5. The method according to any one of claims 1 to 3, wherein the method further comprises:

    obtaining, by the terminal device, the scheduling information of the first data at the first time, wherein the scheduling information comprises the first time domain resource, wherein
    the time information comprises a difference between the remaining stay duration and any one of the following:

      the duration between the first time and the second time, wherein the second time corresponds to the end location of the first time domain resource on which the terminal device communicates the first data; and
      the duration between the first time and the third time, wherein the third time corresponds to the end location of the time domain resource occupied by the feedback information that is of the first data and that is determined based on the scheduling information.

6. The method according to any one of claims 1 to 3, wherein the time information comprises $\Delta t$, and $\Delta t$ is less than the remaining stay duration.

7. The method according to any one of claims 1 to 6, wherein the first indication information further comprises an identification field, and the identification field indicates that the time information is used to: communicate the first data, or communicate a feedback of the first data.

8. The method according to any one of claims 1 to 6, wherein the communicating, by the terminal device, the first data on the target time domain resource comprises:

if the terminal device determines that the remaining stay duration t meets t<T1, communicating, by the terminal device, the first data on the target time domain resource, wherein T1 is the duration between the first time and the second time, the first time corresponds to the time at which the terminal device receives the scheduling information of the first data, the scheduling information comprises the first time domain resource, and the second time corresponds to the end location of the first time domain resource on which the terminal device communicates the first data; and
if the terminal device determines that the remaining stay duration t meets $T2-t_d<t<T2$, communicating, by the terminal device, the feedback information of the first data on the target time domain resource, wherein T2 is the duration between the first time and the third time, the third time corresponds to the end location of the time domain resource occupied by the feedback information that is of the first data and that is determined based on the scheduling information, and $t_d$ is the duration corresponding to the first time domain resource.

9. A data communication method, comprising:

obtaining, by a network device, remaining stay duration of a terminal device on a first beam; and
if determining that communication of first data is not completed within the remaining stay duration, communicating, by the network device, the first data on a target time domain resource, wherein the target time domain resource is determined based on a first time domain resource indicated by the network device and the remaining stay duration.

10. The method according to claim 9, wherein the method further comprises:
sending, by the network device, first indication information, wherein the first indication information indicates time information, and the time information is used with the first time domain resource to determine the target time domain resource.

11. The method according to claim 9 or 10, wherein the network device determines, based on the remaining stay duration and at least one of the following, that the communication of the first data is not completed within the remaining stay duration:

duration between first time and second time, wherein the first time corresponds to time at which the terminal device receives scheduling information of the first data, the scheduling information comprises the first time domain resource, and the second time corresponds to an end location of the first time domain resource on which the terminal device communicates the first data; and
duration between the first time and third time, wherein the third time corresponds to an end location of a time domain resource occupied by feedback information that is of the first data and that is determined based on the scheduling information.

12. The method according to claim 11, wherein it is determined that the communication of the first data is not completed within the remaining stay duration t if one or more of the following are met:

$$t<T1,$$

wherein T1 is the duration between the first time and the second time; and

$$T2-t_d<t<T2,$$

wherein T2 is the duration between the first time and the third time, and $t_d$ is duration corresponding to the first time domain resource.

13. The method according to any one of claims 10 to 12, wherein the time information is the remaining stay duration.

14. The method according to any one of claims 10 to 12, wherein the time information comprises a difference between the remaining stay duration and any one of the following:

the duration between the first time and the second time, wherein the first time corresponds to the time at which the terminal device receives the scheduling information of the first data, the scheduling information comprises the first time domain resource, and the second time corresponds to the end location of the first time domain resource on which the terminal device communicates the first data; and
the duration between the first time and the third time, wherein the third time corresponds to the end location of the time domain resource occupied by the feedback information that is of the first data and that is determined based on the scheduling information.

15. The method according to any one of claims 10 to 12, wherein the time information comprises $\Delta t$, and $\Delta t$ is less than the remaining stay duration.

16. The method according to any one of claims 10 to 15, wherein the first indication information further comprises an identification field, and the identification field indicates that the time information is used to: communicate the first data, or communicate the feedback information of the first data.

17. The method according to any one of claims 9 to 16, wherein the remaining stay duration is determined based on at least one of the following:

> relative locations of the terminal device and the network device;
> a moving speed of the network device; and
> a coverage area of the first beam.

18. A data communication apparatus, comprising:

> a transceiver unit, configured to obtain first indication information, wherein the first indication information indicates time information, and the time information is related to remaining stay duration of a terminal device on a first beam; and
> a processing unit, configured to: when determining that communication of first data is not completed within the remaining stay duration, determine a target time domain resource based on the time information and a first time domain resource indicated by a network device, wherein the transceiver unit is further configured to communicate the first data on the target time domain resource.

19. The apparatus according to claim 18, wherein the processing unit is further configured to determine, based on the remaining stay duration and at least one of the following, that the communication of the first data is not completed within the remaining stay duration:

> duration between first time and second time, wherein the first time corresponds to time at which the terminal device receives scheduling information of the first data, the scheduling information comprises the first time domain resource, and the second time corresponds to an end location of the first time domain resource on which the terminal device communicates the first data; and

duration between the first time and third time, wherein the third time corresponds to an end location of a time domain resource occupied by feedback information that is of the first data and that is determined based on the scheduling information.

20. The apparatus according to claim 19, wherein the processing unit determines that the communication of the first data is not completed within the remaining stay duration t if at least one of the following is met:

$$t < T1,$$

wherein T1 is the duration between the first time and the second time; and

$$T2 - t_d < t < T2,$$

wherein T2 is the duration between the first time and the third time, and $t_d$ is duration corresponding to the first time domain resource.

21. The apparatus according to any one of claims 18 to 20, wherein the time information is the remaining stay duration.

22. The apparatus according to any one of claims 18 to 20, wherein

> the transceiver unit is further configured to obtain the scheduling information of the first data at the first time, wherein the scheduling information comprises the first time domain resource;
> the time information comprises a difference between the remaining stay duration and any one of the following:
>
>> the duration between the first time and the second time, wherein the second time corresponds to the end location of the first time domain resource on which the terminal device communicates the first data; and
>> the duration between the first time and the third time, wherein the third time corresponds to the end location of the time domain resource occupied by the feedback information that is of the first data and that is determined based on the scheduling information.

23. The apparatus according to any one of claims 18 to 20, wherein the time information comprises $\Delta t$, and $\Delta t$ is less than the remaining stay duration.

24. The apparatus according to any one of claims 18 to 23, wherein the first indication information further comprises an identification field, and the identification field indicates that the time information is used to: communicate the first data, or communicate a feedback of the first data.

25. The apparatus according to any one of claims 18 to 23, wherein

   if the processing unit determines that the remaining stay duration t meets t<T1, the transceiver unit communicates the first data on the target time domain resource, wherein T1 is the duration between the first time and the second time, the first time corresponds to the time at which the terminal device receives the scheduling information of the first data, the scheduling information comprises the first time domain resource, and the second time corresponds to the end location of the first time domain resource on which the terminal device communicates the first data; and
   if the processing unit determines that the remaining stay duration t meets $T2-t_d<t<T2$, the transceiver unit communicates the feedback information of the first data on the target time domain resource, wherein T2 is the duration between the first time and the third time, the third time corresponds to the end location of the time domain resource occupied by the feedback information that is of the first data and that is determined based on the scheduling information, and $t_d$ is the duration corresponding to the first time domain resource.

26. A data communication apparatus, comprising:

   a processing unit, configured to obtain remaining stay duration of a terminal device on a first beam, wherein
   the processing unit is further configured to: when determining that communication of first data is not completed within the remaining stay duration, control a transceiver unit to communicate the first data on a target time domain resource, wherein the target time domain resource is determined based on a first time domain resource indicated by a network device and the remaining stay duration.

27. The apparatus according to claim 26, wherein the method further comprises:
   the transceiver unit is further configured to send first indication information, wherein the first indication information indicates time information, and the time information is used with the first time domain resource to determine the target time domain resource.

28. The apparatus according to claim 26 or 27, wherein the processing unit is further configured to determine, based on the remaining stay duration and at least one of the following, that the communication of the first data is not completed within the remaining stay duration:

   duration between first time and second time, wherein the first time corresponds to time at which the terminal device receives scheduling information of the first data, the scheduling information comprises the first time domain resource, and the second time corresponds to an end location of the first time domain resource on which the terminal device communicates the first data; and
   duration between the first time and third time, wherein the third time corresponds to an end location of a time domain resource occupied by feedback information that is of the first data and that is determined based on the scheduling information.

29. The apparatus according to claim 28, wherein the processing unit determines that the communication of the first data is not completed within the remaining stay duration t if at least one of the following is met:

$$t<T1,$$

   wherein T1 is the duration between the first time and the second time; and

$$T2-t_d<t<T2,$$

   wherein T2 is the duration between the first time and the third time, and $t_d$ is duration corresponding to the first time domain resource.

30. The apparatus according to any one of claims 27 to 29, wherein the time information is the remaining stay duration.

31. The apparatus according to any one of claims 27 to 29, wherein the time information comprises a difference between the remaining stay duration and any one of the following:

   the duration between the first time and the second time, wherein the first time corresponds to the time at which the terminal device receives the scheduling information of the first data, the scheduling information comprises the first time domain resource, and the second time corresponds to the end location of the first time domain resource on which the terminal device communicates the first data; and
the duration between the first time and the third time, wherein the third time corresponds to the end location of the time domain resource occupied by the feedback information that is of the first data and that is determined based on the scheduling information.

32. The apparatus according to any one of claims 27 to 29, wherein the time information comprises $\Delta t$, and $\Delta t$ is less than the remaining stay duration.

33. The apparatus according to any one of claims 27 to 32, wherein the first indication information further comprises an identification field, and the identification field indicates that the time information is used to: communicate the first data, or communicate the feedback information of the first data.

34. The apparatus according to any one of claims 26 to 33, wherein the remaining stay duration is determined based on at least one of the following:

relative locations of the terminal device and the network device;
a moving speed of the network device; and
a coverage area of the first beam.

35. A communication apparatus, wherein the apparatus comprises a processor, the processor is coupled to a memory, the memory stores instructions, and when the instructions are run by the processor,

the processor is enabled to perform the method according to any one of claims 1 to 8, or the processor is enabled to perform the method according to any one of claims 9 to 17.

36. A communication apparatus, wherein the apparatus comprises a logic circuit, and the logic circuit is configured to be coupled to an input/output interface, and communicate data through the input/output interface, to perform the method according to any one of claims 1 to 8, or perform the method according to any one of claims 9 to 17.

37. A computer-readable storage medium, wherein the computer-readable storage medium is configured to store a computer program, and when the computer program is run on a computer, the computer is enabled to perform the method according to any one of claims 1 to 8, or the computer is enabled to perform the method according to any one of claims 9 to 17.

38. A computer program product, wherein the computer program product comprises computer program code, and when the computer program code is run, the method according to any one of claims 1 to 8 is implemented, or the method according to any one of claims 9 to 17 is implemented.

39. A communication system, comprising the apparatus according to any one of claims 18 to 25 and the apparatus according to any one of claims 26 to 34.

130 User plane network element

140 Data network

120

New radio

110

NG interface

120

Xn interface

160 Session management network element

New radio

110

120

150 Mobility management network element

Control plane

FIG. 1

FIG. 2

300

| Terminal device | | Network device |
|---|---|---|
| | | S310: Obtain remaining stay duration |
| S330: Obtain the remaining stay duration | ← - - S320: First indication information - - - | |
| | ← S340: First data → | |

FIG. 3

FIG. 4

FIG. 5

FIG. 6

FIG. 7

FIG. 8

600

Processor 610 ── Transceiver 630

Memory 620

FIG. 9

700

Processor 710 ── Transceiver 730

Memory 720

FIG. 10

800

Logic circuit 810

Input/Output interface 820

FIG. 11

## INTERNATIONAL SEARCH REPORT

| | International application No. |
|---|---|
| | **PCT/CN2022/120746** |

| | |
|---|---|
| **A.** | **CLASSIFICATION OF SUBJECT MATTER** |

H04B 7/185(2006.01)i

According to International Patent Classification (IPC) or to both national classification and IPC

| | |
|---|---|
| **B.** | **FIELDS SEARCHED** |

Minimum documentation searched (classification system followed by classification symbols)

H04B7/-, H04W72/-

Documentation searched other than minimum documentation to the extent that such documents are included in the fields searched

Electronic data base consulted during the international search (name of data base and, where practicable, search terms used)

CNABS; CNTXT; ENTXTC; CNKI: 终端, 基站, gNB, eNB, 网络侧, 波束, 数据, 传输, 发送, 接收, 时间, 大于, 小于, 停留, 剩余, 余留, 不够, 不完, 卫星, 指示, 时域, 资源, 小区, 切换, 时长; VEN; USTXT; WOTXT; EPTXT; 3GPP; IEEE: UE, user equipment, gNB, eNB, base station, network, device, send, transmit+, receive, beam, band, frequency, resource, indicat+, time, duration, more, less, minimum, greater, remaining time, switch, cell, satellite

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 111294962 A (SPREADTRUM COMMUNICATIONS SHANGHAI INC.) 16 June 2020 (2020-06-16) description, paragraphs [0037]-[0075] | 1-39 |
| A | CN 111510267 A (CHENGDU HUAWEI TECHNOLOGIES CO., LTD.) 07 August 2020 (2020-08-07) entire document | 1-39 |
| A | US 2019239093 A1 (INTEL CORP.) 01 August 2019 (2019-08-01) entire document | 1-39 |
| A | WO 2021077412 A1 (HUAWEI TECHNOLOGIES CO., LTD.) 29 April 2021 (2021-04-29) entire document | 1-39 |
| A | US 2021136802 A1 (COMCAST CABLE COMMUNICATIONS, L.L.C.) 06 May 2021 (2021-05-06) entire document | 1-39 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 November 2022** | **21 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/120746**

| Patent document cited in search report | | | Publication date (day/month/year) | Patent family member(s) | | | Publication date (day/month/year) |
|---|---|---|---|---|---|---|---|
| CN | 111294962 | A | 16 June 2020 | WO | 2021169727 | A1 | 02 September 2021 |
| CN | 111510267 | A | 07 August 2020 | WO | 2020156174 | A1 | 06 August 2020 |
| | | | | CN | 111510267 | B | 14 December 2021 |
| US | 2019239093 | A1 | 01 August 2019 | US | 2020137588 | A1 | 30 April 2020 |
| | | | | US | 11102661 | B2 | 24 August 2021 |
| WO | 2021077412 | A1 | 29 April 2021 | CN | 114557083 | A | 27 May 2022 |
| US | 2021136802 | A1 | 06 May 2021 | CA | 3098280 | A1 | 05 May 2021 |
| | | | | EP | 3820052 | A1 | 12 May 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111177089